# EUROPÄISCHE PATENTSCHRIFT

(11) **EP 0 618 531 B1**
(45) Veröffentlichungstag und Bekanntmachung des Hinweises auf die Patenterteilung: **18.10.2000**
(21) Anmeldenummer: 93113108.0
(22) Anmeldetag: 16.08.1993
(51) Int. Cl.: G06F 9/445, G08G 1/0968

(54) **Verfahren und Anordnung zum Neu- bzw. Nachladen von Prozessorsteuerprogrammen**
Method and arrangement for loading and reloading control programs of a processor
Méthode et dispositif pour le chargement et le rechargement de programmes d'un processeur

(30) Priorität: 31.03.1993 DE 4310581
(43) Veröffentlichungstag der Anmeldung: 05.10.1994
(73) Patentinhaber: SIEMENS AKTIENGESELLSCHAFT, 80333 München (DE)
(72) Erfinder: Wurzenberger, Richard, Dipl.-Inf., D-81377 München (DE)

(56) Entgegenhaltungen:
- EP-A- 0 021 060
- EP-A- 0 457 940
- WO-A-88/05247
- PATENT ABSTRACTS OF JAPAN vol. 17, no. 277 (P-1546)27. Mai 1993 & JP-A-05 012 000 (FUJITSU TEN LTD) 22. Januar 1993

## Beschreibung

Die Erfindung bezieht sich auf ein Verfahren und eine Anordnung zum Neu- bzw. Nachladen von Prozessorsteuerprogrammen gemäß dem Oberbegriff des Anspruchs 1.

Prozessorgesteuerte Geräte benötigen immer ein Programm zur Steuerung des Prozessors, im allgemeinen als Software bezeichnet. Bei Geräten, die einen fest vorgegebenen Satz von Funktionen durchzuführen haben, wie dies auch beim EURO-SCOUT-Fahrzeuggeräten der Fall ist, ist dieses Programm normalerweise in einem Festdatenspeicher, einem Programmspeicherbaustein, wie z.B. ROMs, PROMs, EPROMs abgelegt. Bei Änderungen aufgrund des technischen Fortschritts oder aufgrund von Fehlerkorrekturen, sowie bei Erweiterungen des Funktionsumfangs ist es häufig notwendig oder auch sinnvoll, dieses Steuerprogramm nach der Auslieferung der Geräte noch ein- oder mehrmals zu ändern. Dazu müssen in der Regel die mikroprozessorgesteuerten Geräte eingesammelt und geöffnet werden, um den Programmspeicherbaustein auszutauschen.

Für eine Änderung des Steuerprogramms mußten also die Geräte bisher entweder zentral gesammelt oder am Einsatzort geöffnet und die betreffenden Speicherbausteine ausgetauscht werden. Waren die Speicherbausteine auf Sockel gesetzt, mußten die herausgezogenen durch neue Bausteine ersetzt werden. Waren sie in die Schaltung eingelötet, konnte der Austausch nur durch kostenintensives und fehleranfälliges Aus- und Einlöten erfolgen. In nachteiliger Weise wurden wegen des hierfür notwendigen Arbeitsaufwandes und der somit entstehenden Kosten solche Programmänderungen möglichst vermieden oder nur in den dringensten Fällen durchgeführt.

Aus WO 88/05247 ist ein Empfänger in einem Kommunikationssystem bekannt, welcher Hochfrequenzsignale von einem Sender empfängt, diese Signale dekodiert, den Signalen entsprechende Ausgabeinformationen erzeugt und einem Nutzer des Systems darstellt. Als Empfänger werden dabei beispielsweise sogenannte 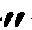 Pager" beschrieben, die der jeweilige Nutzer bei sich trägt. Solche mobilen Empfangsgeräte sind programmgesteuert, und es ist ein Verfahren offenbart, wie die entsprechenden Programme aktualisiert werden. Dazu wird von einer Sendezentrale mit Hilfe eines entsprechenden Protokolls ein neues Programm zum Dekodieren der Signale bzw. neue Adressen an zu aktualisierende Empfänger des Systems übertragen und in den jeweiligen Speicherbausteinen der Empfänger eingespeichert. Dabei sind aufgrund der unidirektionalen Übertragung vom Sender zum Empfänger allerdings individuelle Anpassungen der Programme nur über komplizierte Auswahlmechanismen möglich, die auch eine individuelle Abrechnung für die erneuerten Programme erschwert.

Aufgabe der Erfindung ist es daher, ein Verfahren und eine Anordnung anzugeben, das bzw. die es gestattet, in einfacher und schneller Weise individuelle Prozessorsteuerprogramme oder Teile davon in ein prozessorgesteuertes Gerät einzugeben, ohne dabei den Programmspeicherbaustein austauschen zu müssen, wobei eine sichere Übertragung gewährleistet ist.

Diese Aufgabe wird verfahrensmäßig mit den Merkmalen des Anspruchs 1 und einer entsprechenden Anordnung nach Anspruch 5 gelöst.

Bei dem erfindungsgemäßen Verfahren wird ein Prozessorsteuerprogramm, das in einem gegen Löschen geschützten Festdatenspeicher in einem prozessorgesteuerten Gerät eingeschrieben ist, über eine drahtlose Datenübertragungsschnittstelle neu eingeschrieben, wobei das prozessorgesteuerte Gerät, das ein mobiles Gerät sein kann, ein hierfür vorgesehenes Ladeprogramm und einen entsprechend ausgestalteten Programmspeicher aufweist. Das Ladeprogramm steuert die Kommunikation der Datenübertragungsschittstelle sowie das Löschen und Neuprogrammieren des Festdatenspeichers. Dabei wird das nachzuladende Prozessorsteuerprogramm bzw. das Fragment davon vom prozessorgesteuerten Gerät blockweise von einer dafür vorgesehenen Nachladestation mit einer ebenfalls drahtlosen Datenübertragungsschnittstelle angefordert und im Festdatenspeicher eingeschrieben, wobei die einzelnen Programmblöcke bei der blockweisen Übertragung durch Prüfsummen gesichert sind. Nach beendeter Programmierung des nachgeladenen Prozessorsteuerprogramms wird durch Länge- und Prüfsummenvergleich geprüft, ob die Datenübertragung fehlerfrei erfolgte.

Das erfindungsgemäße Verfahren hat den Vorteil, daß ohne Eingriff in das Gerät ein neues, verbessertes oder zumindest teilweise erforderliches Steuerprogramm an geeigneten Nachladestationen in das mobile prozessorgesteuerte Gerät eingeschrieben werden kann. Es können beispielsweise mehrere Programmversionen neu vorhanden sein, von denen ein Benutzer des prozessorgesteuerten Gerätes nur ein bestimmtes benötigt. Deshalb bietet zweckmäßigerweise die Nachladestation die verfügbaren Programme oder Programmversionen an, indem zyklisch Informationsblöcke ausgesendet werden, mit deren Hilfe die verfügbaren Programme erkannt und dann vom Benutzer oder selbständig vom Gerät ausgewählt werden können.

In vorteilhafter Weise wird das an sich bekannte Übertragungsverfahren mittels Infrarotlicht verwendet.

Das erfindungsgemäße Verfahren kann in vorteilhafter Weise bei einem bekannten Verkehrsleit- und Informationssystem (z.B. EURO-SCOUT; EP-PS-00 21 060) verwendet werden, wobei zweckmäßigerweise das Vorhandensein eines Nachladesteuerprogramms über Sendebaken des bekannten Verkehrsleit- und Informationssystem dem mobilen Gerät, das in der Regel im Fahrzeug installiert ist, mitgeteilt wird.

Zur Durchführung des erfindungsgemäßen Verfahrens ist eine Anordnung vorgesehen, die eine Nachladestation aufweist, die von einer Feststation mit einem Rechner, mit einer Datenübertragungsschnittstelle und mit einer Anzeigeeinrichtung gebildet ist. Ferner weist die Anordnung ein prozessorgesteuertes Gerät in Form eines Bordrechner, welcher im Fahrzeug angeordnet ist, auf. Daran ist ebenfalls eine drahtlose Datenübertragungsschnittstelle angeordnet.

In zweckmäßiger Weise kann die Nachladestation in Form einer einspurigen Durchfahrt ausgebildet sein, in die das Fahrzeug einfährt und für die Dauer des Nachladens verweilt.

In einer anderen zweckmäßigen Ausgestaltung der Erfindung kann die Nachladestation von einer Tankstelle gebildet sein, so daß während des Tankens auch das nachzuladende Programm in den Bordrechner eingeschrieben werden kann.

In einer weiteren Ausgestaltung der Erfindung kann die Nachladestation eine mehrspurige Durchfahrt für das gleichzeitige Nachladen in mehrere Fahrzeuge aufweisen. Bei der erfindungsgemäßen Anordnung ist es besonders vorteilhaft, die Datenübertragungsschnittstellen in Form der Infrarotschnittstellen des bekannten Verkehrsleit- und Informationssystems zu verwenden. Um den Nachladevorgang anzuzeigen, sind entweder Anzeigeeinrichtungen in der Nachladestation vorgesehen, oder aber es wird die im Fahrzeug vorhandene Anzeigeeinrichtung eines für das bekannte Verkehrsleit- und Informationssystem ausgerüsteten Fahrzeugs verwendet, wobei von der Ladestation aus diese Anzeige in das Fahrzeug mit übertragen und angezeigt wird.

Darüberhinaus ist es auch möglich, anstelle der speziellen Nachladestationen die Infrarotbaken des Verkehrsleit- und Informationssystems für das Nachladen bzw. Neueinschreiben der Steuerprogramme in den Festdatenspeicher des Fahrzeugs zu verwenden, wobei das zu ladende Prozessorsteuerprogramm stückweise, d.h. von Bake zu Bake, in das Fahrzeug übertragen wird. Dies hat den Vorteil, daß dann keine separaten Nachladestationen erforderlich sind, es dauert jedoch das Einschreiben eines kompletten Programms länger als die normale Kontaktzeit an einer Bake, so daß das nachzuladende Steuerprogramm abschnittsweise, d.h. immer ein Teil an einer anderen Bake, die gerade passiert wird, übertragen wird.

Anhand der Zeichnung wird die Erfindung kurz erläutert. Dabei zeigen
Fig. 1 schematisch die prinzipielle Anordnung der Erfindung,
Fig. 2 schematisch eine Nachladestation in der Gestalt einer Durchfahrt und
Fig. 3 eine Nachladestation schematisch in der Gestalt einer Tankstelle.

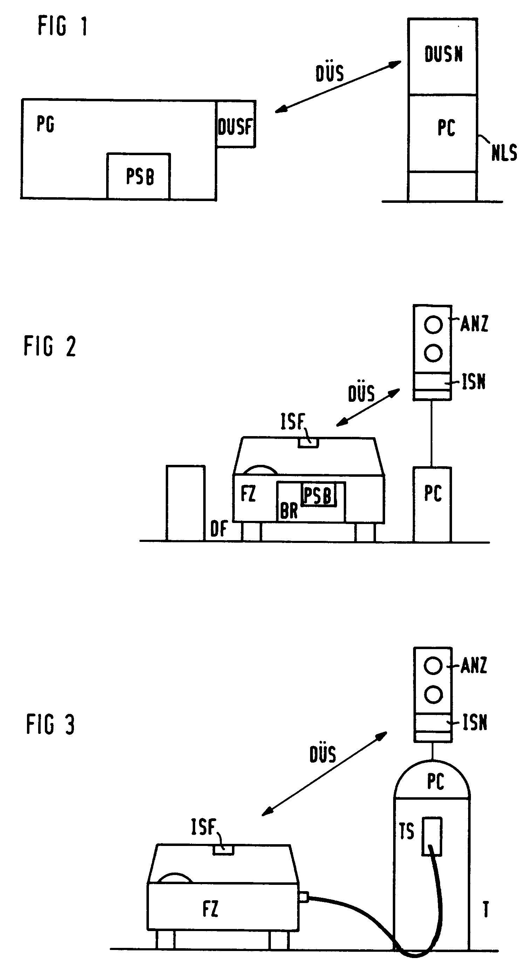

Wie in Fig. 1 schematisch gezeigt, weist eine Nachladestation NLS weist einen Rechner, beispielsweise einen Personalcomputer PC, und eine Datenübertragungsschnittstelle DUSN auf, die in bevorzugter Weise eine Infrarotschnittstelle ISN ist. Das mobile, prozessorgesteuerte Gerät PG weist u.a. einen Programmspeicherbaustein und ebenfalls eine Datenübertragungsschnittstelle DÜS auf. Die Datenübertragungsstrecke DIS kann eine Funkverbindung sein, ist in bevorzugter Weise hier eine Infrarotübertragungsstrecke.

In Fig. 2 ist die Nachladestation NLS in Form einer Durchfahrt DF gestaltet, die beispielsweise hier einspurig ausgebildet ist. Die Nachladestation weist einen Rechner PC die Datenübertragungsschnittstelle ISN und zusätzlich eine Anzeigeeinrichtung ANZ auf, an der ersichtlich ist, daß beispielsweise geladen werden kann, daß der Ladevorgang läuft und wann der Ladevorgang beendet ist. Mit DÜS ist die Übertragungsstrecke zum Fahrzeug FZ bezeichnet, im Fahrzeug selbst ist ein Bordrechner BR, wie er beispielsweise für das Verkehrsleit- und Informationssystem erforderlich ist, angeordnet. Der Bordrechner weist als Festdatenspeicher beispielsweise einen Programmspeicherbaustein PSB auf. Der Bordrechner ist mit der Infrarot-Datenübertragungsschnittstelle ISF verbunden, die bei dem bekannten System am Auto am Innen- oder Außenspiegel angeordnet sein kann.

Die Nachladestation kann auch mehrspurig ausgebildet sein, so daß gleichzeitig je Durchfahrt ein Laden in mehrere Fahrzeuge erfolgen kann. Dabei ist es zweckmäßig, den Ladevorgang im jeweiligen Fahrzeug anzuzeigen.

In Fig. 3 ist in ähnlicher Weise eine Nachladestation NLS gezeigt, die als Tankstelle T ausgebildet ist. Beispielsweise kann an der Tanksäule TS diese Nachladestation mit integriert sein, wobei der Rechner PC dort untergebracht ist und die Anzeigeeinrichtung ANZ mit der Infrarot-Datenübertragungsschnittstelle ISN, die das Programm über die Datenübertragungsstrecke DÜS zum Fahrzeug FZ mit der Infrarot-Datenübertragungsschnittstelle ISF überträgt.

Im ersten Fall kann das Fahrzeug in die einspurige Durchfahrt einfahren und nach dem Ladevorgang einfach vorwärts wieder ausfahren. Im Fall der Tankstelle kann während des Tankens auf Wunsch gleichzeitig eine neue Programmversion in den Bordrechner des Fahrzeugs nachgeladen werden. Auf diese Weise ist es möglich, die Steuerprogramme vorzugsweise mobiler Geräte (im speziellen der EURO-SCAUT-Fahrzeuggeräte) einfach und schnell, sozusagen im Durchfahren, auszutauschen bzw. zu ändern.

## Patentansprüche

1. Verfahren zum Neu- bzw. Nachladen von Prozessorsteuerprogrammen, die in einem gegen Löschen geschützten Festdatenspeicher (PSB) geladen sind, bei prozessorgesteuerten Geräten (PG), wobei
das Laden über eine drahtlose Datenübertragungsschnittstelle (DUSF) erfolgt, und das prozessorgesteuerte Gerät (PG) ein mobiles Gerät ist, in dem ein hierfür vorgesehenes Ladeprogramm installiert ist, welches die Kommunikation der Datenübertragungsschnittstelle (DUSF) sowie das Löschen und Neuprogrammieren des Festdatenspeichers (PSB) steuert, **dadurch gekennzeichnet,** daß das nachzuladende Prozessorsteuerprogramm bzw. Programmteile vom prozessorgesteuerten Gerät (PG) blockweise von einer dafür vorgesehenen Nachladestation (NLS) mit einer ebenfalls drahtlosen Datenübertragungsschnittstelle (DUSN) angefordert und eingespeichert wird, daß die einzelnen Programmblöcke bei der blockweisen Übertragung (DÜS) durch Prüfsummen gesichert sind, und daß nach beendeter Einprogrammierung das nachgeladene Prozessorsteuerprogramm durch Längen- und Prüfsummenvergleich auf Fehlerfreiheit der Datenübertragung überprüft wird.

2. Verfahren nach Anspruch 1,
**dadurch gekennzeichnet**, daß die Nachladestation (NLS) durch zyklisches Aussenden eines Informationsblockes verfügbare Programme bzw. Programmversiönen zum Nachladen anbietet.

3. Verfahren nach Anspruch 1,
**dadurch gekennzeichnet**, daß die Übertragung mittels Infrarotlicht erfolgt.

4. Verfahren nach einem der vorhergehenden Ansprüche,
**dadurch gekennzeichnet**, daß es in einem bekannten Verkehrsleit- und Informationssystem verwendet wird, wobei das Vorhandensein eines Nachladesteuerprogramms über Sendebaken des Systems den Fahrzeugen mitgeteilt wird.

5. Anordnung zum Neu- bzw. Nachladen von Prozessorsteuerprogrammen, die in einem gegen Löschen geschützten Festdatenspeicher (PSB) geladen sind,
- mit einer Nachladestation (NLS), die eine Datenübertragungsschnittstelle (DUSN) aufweist,
- mit einem prozessorgesteuerten mobilen Gerät (PG), welches den Festdatenspeicher (PSB) sowie eine weitere Datenübertragungsschnittstelle (DUSF) und ein installiertes Ladeprogramm aufweist, wobei das Ladeprogramm die drahtlose Kommunikation der weiteren Datenübertragungsschnittstelle (DUSF) mit der Datenübertragungsschnittstelle (DUSN) der Nachladestation (NLS) sowie das Löschen und Neuprogrammieren des Festdatenspeichers (PSB) steuert,
**dadurch gekennzeichnet,**
daß die Nachladestation (NLS) als Feststation mit einem Rechner (PC) und mit einer Anzeigeeinrichtung (ANZ) ausgebildet ist,
daß das prozessorgesteuerte Gerät (PG) einen in einem Fahrzeug (FZ) angeordneten Bordrechner (BR) umfaßt und so ausgebildet ist, daß es das Prozessorsteuerprogramm bzw. Programmteile blockweise von der Nachladestation anfordert und speichert, wobei die einzelnen Programmblöcke bei der blockweisen Übertragung durch Prüfsummen gesichert sind und daß es nach beendeter Einprogrammierung das nachgeladene Prozessorsteuerprogramm durch Längen- und Prüfsummenvergleich auf Fehlerfreiheit der Datenübertragung überprüft.

6. Anordnung nach Anspruch 5,
**dadurch gekennzeichnet**, daß die Nachladestation (NLS) zumindest eine einspurige Durchfahrt (DF) aufweist.

7. Anordnung nach Anspruch 5,
**dadurch gekennzeichnet**, daß die Nachladestation (NLS) eine Tankstelle (T) ist.

8. Anordnung nach einem der Ansprüche 5 bis 7,
**dadurch gekennzeichnet**, daß die Datenübertragungsschnittstelle (DUSF) des Fahrzeugs (FZ) von der dort bereits vorhandenen und die Datenübertragungsschnittstelle (DUSN) der Nachladestation (NLS) von der aus den Infrarot-Baken bekannten Infrarot-Übertragungsschnittstellen des bekannten Verkehrsleit- und Informationssystems gebildet sind.

9. Anordnung nach einem der Ansprüche 5 bis 8,
**dadurch gekennzeichnet**, daß eine Anzeigeeinrichtung (ANZ) der Nachladestation (NLS) den Nachladevorgang anzeigt, oder daß der Nachladevorgang im Fahrzeug (FZ) selbst anzeigbar ist.

10. Anordnung nach Anspruch 5 oder 8,
**dadurch gekennzeichnet**, daß anstelle der separaten Nachladestation die Infrarot-Baken des Verkehrsleit- und Informationssystems vorgesehen sind, wobei das zu ladende Prozessorsteuerprogramm stückweise, d.h. von Bake zu Bake, in das Fahrzeug übertragen wird.

## Claims

1. Method for reloading processor control programs which are loaded in a read only memory (PSB) which is protected against erasure, for processor-controlled appliances (PG), with the loading taking place via a wire-free data transmission interface (DUSF) and the processor-controlled appliance (PG) being a mobile appliance in which a loading program is installed which is intended for this purpose and controls the communication of the data transmission interface (DUSF) as well as the erasure and reprogramming of the read only memory (PSB), characterized in that the processor control program or program parts to be reloaded is or are requested and saved by the processor-controlled appliance (PG) in blocks from a reloading station (NLS), which is provided for this purpose and has a likewise wire-free data transmission interface (DUSN), in that the individual program blocks are protected during the block-by-block transmission (DÜS) by means of checksums, and in that once the programming process has been completed, the reloaded processor control program is checked for freedom from errors in the data transmission by means of a length and checksum comparison.

2. Method according to Claim 1,
characterized in that the reloading station (NLS) offers available programs or program versions for reloading by cyclic transmission of an information block.

3. Method according to Claim 1,
characterized in that infrared light is used for transmission.

4. Method according to one of the preceding claims,
characterized in that said method is used in a known traffic control and information system, with the presence of a reloading control program being reported to the vehicles via system transmission beacons.

5. Arrangement for reloading processor control programs which are loaded in a read only memory (PSB) which is protected against erasure,
- having a reloading station (NLS) which has a data transmission interface (DUSN),
- having a processor-controlled mobile appliance (PG) which has the read only memory (PSB) as well as a further data transmission interface (DUSF) and an installed loading program, with the loading program controlling the wire-free communication of the further data transmission interface (DUSF) with the data transmission interface (DUSN) of the reloading station (NLS) as well as the erasure and reprogramming of the read only memory (PSB),
characterized
in that the reloading station (NLS) is in the form of a fixed station having a computer (PC) and having a display device (ANZ),
in that the processor-controlled appliance (PG) comprises a vehicle computer (BR) which is arranged in a vehicle (FZ) and is designed such that it requests and saves the processor control program or program parts in blocks from the reloading station, with the individual program blocks being protected during the block-by-block transmission by means of checksums, and in that once the programming process has been completed, the reloaded processor control program is checked for freedom from errors in the data transmission by means of a length and checksum comparison.

6. Arrangement according to Claim 5,
characterized in that the reloading station (NLS) has at least one single-lane passageway (DF).

7. Arrangement according to Claim 5,
characterized in that the reloading station (NLS) is a petrol station (T).

8. Arrangement according to one of claims 5 to 7,
characterized in that the data transmission interface (DUSF) of the vehicle (FZ) is formed by the infrared transmission interface which is already there, and the data transmission interface (DUSN) of the reloading station (NLS) is formed from the infrared transmission interface, which is known from the infrared beacons, of the known traffic control and information system.

9. Arrangement according to one of Claims 5 to 8,
characterized in that a display device (ANZ) on the reloading station (NLS) indicates the reloading process, or in that the reloading process can be displayed in the vehicle (FZ) itself.

10. Arrangement according to Claim 5 or 8,
characterized in that the infrared beacons of the traffic control and information system are provided instead of the separate reloading station, with the processor control program to be loaded being transmitted to the vehicle piece-by-piece, that is to say from beacon to beacon.

## Revendications

1. Procédé pour recharger ou compléter des programmes de commande de processeurs qui sont chargés dans une mémoire (PSB) morte protégée de l'effaçage, pour des appareils (PG) commandés par processeur, le chargement s'effectuant par l'intermédiaire d'une interface (DUSF) de transmission de données sans fil et l'appareil (PG) commandé par processeur étant un appareil mobile dans lequel est installé un programme de chargement prévu à cet effet qui commande la communication de l'interface (DUSF) de transmission de données ainsi que l'effaçage et la reprogrammation de la mémoire (PSB) morte, caractérisé en ce que le programme de commande de processeur ou les parties de commande à recharger de l'appareil (PG) de commande de processeur sont demandés et enregistrés par un poste (NLS) de rechargement prévu à cet effet, comportant une interface (DUSN) de transmission de données également sans fil, en ce que les blocs de programme individuel sont protégés lors de la transmission (DÜS) par blocs par total de vérification, et en ce que, une fois l'entrée de programme achevée, il est vérifié par comparaison de longueur et de total de vérification si les données du programme de commande de processeur rechargé ont été transmises sans erreur.

2. Procédé suivant la revendication 1, caractérisé en ce que le poste (NLS) de rechargement offre au rechargement des programmes ou des versions de programme disponibles par émission cyclique d'un bloc d'information.

3. Procédé suivant la revendication 1, caractérisé en ce que la transmission s'effectue au moyen de lumière infrarouge.

4. Procédé suivant l'une des revendications précédentes, caractérisé en ce qu'il est utilisé dans un système connu de guidage de trafic et d'informations, la présence d'un programme de commande de rechargement étant communiquée au véhicule automobile par l'intermédiaire d'avertisseurs optiques d'émission du système.

5. Dispositif pour recharger ou compléter des programmes de commande de processeurs qui sont chargés dans une mémoire (PSB) morte protégée de l'effaçage,
- comportant un poste (NLS) de rechargement qui comporte une interface (DUSN) de transmission de données,
- comportant un appareil (PG) mobile, commandé par programme, qui comporte la mémoire (PSB) morte ainsi qu'une interface (DUSF) de transmission de données supplémentaires et un programme de chargement installé, le programme de chargement commandant la communication sans fil de l'interface (DUSF) de transmission de données supplémentaires avec l'interface (DUSN) de transmission de données du poste (NLS) de rechargement, ainsi que l'effaçage et la reprogrammation de la mémoire (PSB) morte,
caractérisé en ce que le poste (NLS) de rechargement est réalisé en poste fixe ayant un ordinateur (PC) et ayant un dispositif (ANZ) d'affichage,
en ce que l'appareil (PG) commandé par processeur comprend un ordinateur (BR) de bord monté dans un véhicule (FZ) automobile et est réalisé de manière à demander au poste de rechargement le programme de commande du processeur ou des parties de commande par blocs et à les enregistrer, les blocs de programme individuel étant protégés lors de la transmission par blocs par total de vérification et de manière à vérifier, une fois l'entrée de programme achevée, par comparaison de longueur et comparaison de total de vérification, que les données du programme de commande de processeur rechargé ont été transmises sans erreur.

6. Dispositif suivant la revendication 5, caractérisé en ce que le poste (NLS) de rechargement comporte au moins un passage (DF) à une voie.

7. Dispositif suivant la revendication 5, caractérisé en ce que le poste (NLS) de rechargement est un poste (T) de ravitaillement en carburant.

8. Dispositif suivant l'une des revendications 5 à 7, caractérisé en ce que l'interface (DUSF) de transmission de données du véhicule (FZ) automobile est formée par celle qui est déjà présente et l'interface (DUSN) de transmission de données du poste (NLS) de rechargement est formée par l'interface de transmission à infrarouge, connue par les avertisseurs optiques à infrarouge, du système de guidage de trafic et d'informations connu.

9. Dispositif suivant l'une des revendications 5 à 8, caractérisé en ce qu'un dispositif (ANZ) d'affichage du poste (NLS) de rechargement affiche l'opération de rechargement, ou en ce que l'opération de rechargement peut être affichée dans le véhicule (FZ) lui-même.

10. Dispositif suivant la revendication 5 ou 8, caractérisé en ce qu'il est prévu au lieu du poste de rechargement séparé les avertisseurs optiques à infrarouge du système de guidage de trafic et d'informations, le programme de commande de processeur à charger étant transmis au véhicule morceau par morceau, c'est à dire d'avertisseur optique en avertisseur optique.
